# EUROPEAN PATENT APPLICATION

(11) **EP 0 875 842 A2**
(43) Date of publication of application: **04.11.1998**
(21) Application number: 98107822.3
(22) Date of filing: 29.04.1998
(51) Int. Cl.: G06F 17/30, G01C 21/20

(54) **Information retrieval apparatus, information retrieval method and navigation apparatus with information retrieval function**

(30) Priority: 02.05.1997 JP 114908/97
(71) Applicant: PIONEER ELECTRONIC CORPORATION, Meguro-ku Tokyo-to (JP)
(72) Inventor: Yano, Kenichiro, Pioneer Elec. Corp. Kawagoe Works, Kawagoe-shi, Saitama-ken (JP); Miyajima, Tomomi Pioneer Elec. Corp. Kawagoe Works, Kawagoe-shi, Saitama-ken (JP)
(74) Representative: Klingseisen, Franz, Dipl.-Ing.

(57) **Abstract**

An information retrieval apparatus for retrieving a target information corresponding to an input data, from an information group including a plurality of information, the plurality of information being divided into a plurality of levels of a hierarchical structure in the information group, characterized in that the information retrieval apparatus has: a first searching device for searching a registration area in which a plurality of information are registered for the target information; a first determining device for determining whether or not there is the target information in the registration area; a second searching device for searching the information group for the target information for each level, if the first determining device determines that there is not the target information in the registration area; a second determining device for determining whether or not there is the target information in the information group; a registering device for registering the target information into the registration area from the information group, if the second determining device determines that there is the target information in the information group; and an outputting device for outputting the target information from the registration area if the first determining device determines that there is the target information in the registration area, and for outputting the target information from the information group if the second determining device determines that there is the target information in the information group.

## Description

### BACKGROUND OF THE INVENTION

### 1. Field of the Invention

The present invention relates to an information retrieval apparatus and an information retrieval method, and particularly relates to an information retrieval apparatus and an information retrieval method used for a navigation apparatus, wherein information, such as a destination position name, is retrieved from a built-in dictionary.

### 2. Description of the Related Art

There is a so-called navigation apparatus, which displays a map including a position where a movable body in various kinds such as an automobile, an airplane, a ship etc., is currently located, on a picture plane of a CRT (Cathode Ray Tube) display device, a LCD (Liquid Crystal Display) device or the like, and further superimposes a position mark indicating a position of the movable body at the currently located position on the displayed map, so as to perform a route guidance or navigation to the destination on the basis of the display.

Among the navigation apparatuses, as on-vehicle navigation apparatuses which are mounted on vehicles or auto-mobiles, there is a self-sustained or built-in type navigation apparatus and a GPS (Global Positioning System) type navigation apparatus as rough categories. The former is a navigation apparatus, which obtains a moving direction and a moving distance of the movable body by use of a speed sensor, an angular speed sensor, a direction sensor etc. equipped in or built in the pertinent vehicle, adds them with respect to a standard position so as to calculate the current position, and displays the current position mark and the corresponding map on the display picture plane on the basis of the calculated current position. On the other hand, the latter is a navigation apparatus, which receives electric waves from a plurality of GPS satellites launched in the space, calculates the current position of the movable body by means of a 3-dimensional measuring method or a 2-dimensional measuring method on the basis of the electric wave reception results, and displays the current position mark and the corresponding map on the display picture plane on the basis of the calculated current position. Further, there is an on-vehicle navigation apparatus provided with both functions of the above described self-sustained type and GPS type.

In the navigation apparatuses, it is basic to display the current position of the self vehicle of the user (driver) and the map in the vicinity of the current position in association with each other, so as to guide the user to reach a destination without loosing his or her way even in an area where the user has never experienced. Further, there is a navigation apparatus capable of displaying an optimum route to the destination, a distance to the destination etc., and also a navigation apparatus capable of telling a moving direction to the user audibly by use of a synthetic voice such as "Turn to the right at the next corner!", "Go straight on!" etc., when it comes to an intersection or branch.

In these kinds of navigation apparatuses, since the user is often in the middle of driving his vehicle, it is desirable that the user can grasp the displayed information as easily as possible, and that the user can perform operations of the apparatus such as an information inputting operation, a mode switching operations and so on as easily as possible. For this reason, it may be proposed a navigation apparatus which is capable of voice-inputting various information e.g. (i) position confirmation information to confirm positions such as a representative position to call for a peripheral map, a destination position, a departure position etc., and (ii) control command confirmation information to confirm various control commands, by utilizing the recently developed voice recognition technique. More concretely, in this navigation apparatus, the human voice of the user is picked up by a microphone provided in the movable body, this picked up voice is recognized as the word or language by the voice recognition technique, and the recognized word is treated as the input data.

This kind of voice recognition technique is performed by use of a voice recognition circuit to recognize a voice of a specified talker or a voice recognition circuit to recognize a voice of an unspecified talker. Each of these circuits is developed and diffused on the market as an IC (Integrated Circuit), which refers to a built-in dictionary (e.g. Japanese dictionary) by use of the voice or audio signal as its input, and which outputs word candidacies, each of which is close to a word indicated by the inputted voice sound on the basis of an order of approximation of the spectrum pattern of the voice sound frequency of each word, vocable, consonant or the like. According to the voice recognition circuit for the specified talker, it is possible to conduct a very precise voice recognition by use of the spectrum pattern of the voice sound frequency of the specified talker as the standard. On the other hand, according to the voice recognition circuit for the unspecified talker, the accuracy of recognition is varied in dependence on the individual talkers since the spectrum patterns etc. of the voice sound frequencies of the unspecified talkers are different from each other, which is disadvantage, while there is a certain advantage that the unspecified user can use it. Thus, the latter (i.e. the circuit for the unspecified talker) is estimated to be suitable for the navigation apparatus for the vehicle or auto-mobile for general purposes.

The voice recognition circuit for the unspecified talker is constructed as following. Namely, if the user generates such a voice sound to a microphone as "Tokyo Tocho" (which means Tokyo City Agency in Japanese) for example, the voice or audio sound signal is inputted thereinto corresponding to this voice sound through the microphone. Then, the built-in dictionary is referred to, and 5 candidacies e.g. "Tokyo Tocho", "Tokyo To" (which means Tokyo City in Japanese), "Tokyo Dojo" (which means Tokyo School in Japanese), "Tokyo Dome" and "Tokkyo-Cho" (which means Japanese Patent Office in Japanese) for example, are outputted in forms of word candidacy data each of which accompanies a score indicating quantitatively how respective word candidacy is approximated or resembled to the inputted voice sound. Therefore, the navigation apparatus which employs this voice recognition circuit for the unspecified talker is constructed such that the word candidacy of "Tokyo Tocho", which has the highest score among those outputted five candidacies for example, is determined as the voice information inputted thereinto, so that the predetermined navigation process is successively performed on the basis of this determination result. More concretely, the map including "Tokyo Tocho" is displayed, and the optimum route to "Tokyo Tocho", a travel distance to "Tokyo Tocho", an estimated travel or arriving time to "Tokyo Tocho" etc. are displayed.

In this manner, according to the navigation apparatus, which has the voice inputting function by use of the voice recognition circuit for the unspecified talker, it is possible for the user to input various information easily without touching a button or panel by his finger, and without watching or confirming the candidacies on the display picture plane, which is very convenient for the user.

However, there is a limit to the number of words that the above mentioned voice recognition circuit can recognize at a lime. For example, the voice recognition circuit can recognize no more than 500 to 1000 words approximately. Of course, it is possible to increase the number of recognizable words by increasing a speed of the retrieval operation and increasing a memory capacity. But, as the number of words increases, a possibility of occurrence of false recognition increases.

In order to increase the number of recognizable words with restricting false recognition, a method wherein the word candidacy data is stored into one or more dictionaries by using a hierarchical structure, and the retrieval operation is performs for each level of the hierarchical structure.

In this method, when the desired word candidacy data is retrieved from among plural word candidacies data included in a first level, information to designate the second level correlated with the retrieved word candidacy data can be obtained. Next, the second level is selected on the basis of the information, and the next word candidacy data is retrieved from among plural word candidacy data included in the second level. If such a retrieval operation is repeatedly performed, the subject of the retrieval operation shifts to lower level step by step, and thereby, the dictionaries are narrowed down. As a result, the target word data is finally obtained.

If the retrieval operation is performs for each level, the number of words that the voice recognition circuit need to recognize at a time can be reduced. Accordingly, false recognition can be reduced.

In this method, as the number of levels in the hierarchical structure is increased, false recognition can be reduced. But, as the retrieval operation is performed for each level, the user need to input the voice sound each time the retrieval operation is performed. Therefore, the user need to pronounce the word with respect the target destination place again and again, and there for, it lakes long time for the user to obtain the final result. Especially, even when the user knows the name of the target destination place well, or the name of the same destination place is set again, the user need to pronounce the name of the destination place again and again. This is very inconvenient.

Moreover, the same problem arises in a navigation apparatus wherein the user inputs data by touching buttons or switches according to an instruction displayed on a display panel in order to input data necessary for the retrieval operation. Namely, as the number of levels in the hierarchical structure is increased, false recognition can be reduced, but the retrieving time increases.

### SUMMARY OF THE INVENTION

It is therefore an object of the present invention to provide an information retrieval apparatus, an information retrieval method and a navigation apparatus with an information retrieval function, which can quickly and accurately retrieve target information.

According to the present invention, the above mentioned object can by achieved by an information retrieval apparatus for retrieving a target information corresponding to an input data, from an information group including a plurality of information, the plurality of information being divided into a plurality of levels of a hierarchical structure in the information group, characterized in that the information retrieval apparatus has: a first searching device for searching a registration area in which a plurality of information are registered for the target information; a first determining device for determining whether or not there is the target information in the registration area; a second searching device for searching the information group for the target information for each level, if the first determining device determines that there is not the target information in the registration area; a second determining device for determining whether or not there is the target information in the information group; a registering device for registering the target information into the registration area from the information group, if the second determining device determines that there is the target information in the information group; and an outputting device for outputting the target information from the registration area if the first determining device determines that there is the target information in the registration area, and for outputting the target information from the information group if the second determining device determines that there is the target information in the information group.

Namely, in a case that the user inputs the input data for the first time, the first searching device searches the registration area for the target information corresponding to the input data, and the first determining device determines whether or not there is the target information in the registration area. If there is not the target information in the registration area, the second searching device next searches the information group for the target information for each level. For example, the second searching device searches from the highest level to the lowest level of the hierarchical structure of the information group for each level, and the second determining device determines whether or not there is the target information in the information group. If there is the target information in the information group, a registering device registers the target information into the registration area from the information group. Then, the outputting device outputs the target information from the information group.

Thus, the target information corresponding to the input data is retrieved from the information group, and registered in the registration area.

On the other hand, in a case that the user inputs the same input data again, the first searching device searches the registration area for the target information corresponding to the input data, and the first determining device determines whether or not there is the target information in the registration area. Here, the target information corresponding to the input data is the same as the retrieved target information at the last time or in the past. Therefor, the target information has been registered in the registration area. As a result, the first searching device finds the target information, and the first determining device determines that there is the target information in the registration area. Then, the outputting device outputs the target information from the registration area. At this time, the searching operation by the second searching device and the determination by the second determining device are not performed any longer.

Thus, with respect to the same input data, i.e., the input data inputted at the last time or in the past, the target information can be found by searching only the registration area. Accordingly, it is possible to retrieve the target information quickly and accurately.

According to the present invention, the above mentioned object can be also achieved by an information retrieval apparatus for retrieving a target word corresponding to an input voice sound, from a dictionary including a plurality of words, the plurality of words being divided into a plurality of levels of a hierarchical structure in the dictionary, characterized in that the information retrieval apparatus has: a first searching device for searching a registration area in which a plurality of words are registered for the target word; a first determining device for determining whether or not there is the target word in the registration area; a second searching device for searching the dictionary for the target word for each level, if the first determining device determines that there is not the target word in the registration area; a second determining device for determining whether or not there is the target word in the dictionary; a registering device for registering the target word into the registration area from the dictionary, if the second determining device determines that there is the target word in the dictionary; and an outputting device for outputting the target word from the registration area if the first determining device determines that there is the target word in the registration area, and for outputting the target word from the dictionary if the second determining device determines that there is the target word in the dictionary.

Namely, in a case that the user inputs the input voice sound by his or her voice for the first time, the target word corresponding to the input voice sound is retrieved and registered in the registration area. Thereby, in a case that the user inputs the same input voice sound again, the target word can be quickly found from the registration area. Accordingly, it is possible to retrieve the target word quickly and accurately.

According to the present invention, the above mentioned object can be also achieved by an information retrieval method of retrieving a target information corresponding to an input data, from an information group including a plurality of information, the plurality of information being divided into a plurality of levels of a hierarchical structure in the information group, characterized in that the information retrieval method has the processes of: searching a registration area in which a plurality of information are registered for the target information; determining whether or not there is the target information in the registration area; searching the information group for the target information for each level, if it is determined that there is not the target information in the registration area; determining whether or not there is the target information in the information group; registering the target information into the registration area from the information group, if it is determined that there is the target information in the information group; and outputting the target information from the registration area if it is determined that there is the target information in the registration area, and outputting the target information from the information group if it is determined that there is the target information in the information group.

Namely, in a case that the user inputs the input data for the first time, the target information corresponding to the input data is retrieved and registered in the registration area. Thereby, in a case that the user inputs the same input data again, the target information can be quickly found from the registration area. Accordingly, it is possible to retrieve the target information quickly and accurately.

According to the present invention, the above mentioned object can be achieved by an information retrieval method of retrieving a target word corresponding to an input voice sound, from a dictionary including a plurality of words, the plurality of words being divided into a plurality of levels of a hierarchical structure in the dictionary, characterized in that the information retrieval method has the processes of: searching a registration area in which a plurality of words are registered for the target word; determining whether or not there is the target word in the registration area; searching the dictionary for the target word for each level, if it is determined that there is not the target word in the registration area; determining whether or not there is the target word in the dictionary; registering the target word into the registration area from the dictionary, if it is determined that there is the target word in the dictionary; and outputting the target word from the registration area if it is determined that there is the target word in the registration area, and outputting the target word from the dictionary if it is determined that there is the target word in the dictionary.

Namely, in a case that the user inputs the input voice sound by his or her voice for the first time, the target word corresponding to the input voice sound is retrieved and registered in the registration area. Thereby, in a case that the user inputs the same input voice sound again, the target word can be quickly found from the registration area. Accordingly, it is possible to retrieve the target word quickly and accurately.

According to the present invention, the above mentioned object can be achieved by a navigation apparatus for navigating a movable body, characterized in that the navigation apparatus has: an inputting device for inputting an input data; a first searching device for searching a registration area in which a plurality of words are registered for a target information corresponding to the input data; a first determining device for determining whether or not there is the target information in the registration area; a second searching device for referring a dictionary including a plurality of information divided into a plurality of levels of a hierarchical structure and searching a dictionary for the target information for each level, if the first determining device determines that there is not the target information in the registration area; a second determining device for determining whether or not there is the target information in the dictionary; a registering device for registering the target information into the registration area from the dictionary, if the second determining device determines that there is the target information in the dictionary; and a navigation control device for performing a navigation process to navigate the movable body on the basis of target information obtained from the registration area if the first determining device determines that there is the target information in the registration area, and for performing the navigation process to navigate the movable body on the basis of target information obtained from the dictionary if the second determining device determines that there is the target information in the dictionary.

Namely, in a case that the user inputs the input data by the input device for the first time, the first searching device searches the registration area for the target information corresponding to the input data, and the first determining device determines whether or not there is the target information in the registration area. If there is not the target information in the registration area, the second searching device next searches the dictionary for the target information for each level. For example, the second searching device searches from the highest level to the lowest level of the hierarchical structure of the dictionary for each level, and the second determining device determines whether or not there is the target information in the dictionary. If there is the target information in the dictionary, a registering device registers the target information into the registration area from the dictionary. Then, the navigation control device performs the navigation process to navigate the movable body on the basis of target information obtained from the registration area.

Thus, the target information corresponding to the input data is retrieved from the dictionary, and registered in the registration area.

On the other hand, in a case that the user inputs the same input data again, the first searching device searches the registration area for the target information corresponding to the input data, and the first determining device determines whether or not there is the target information in the registration area. Here, the target information corresponding to the input data is the same as the retrieved target information at last time or in the past. Therefore, the target information has been registered in the registration area. As a result, the first searching device finds the target information, and the first determining device determines that there is the target information in the registration area. Then, the navigation control device performs the navigation process to navigate the movable body on the basis of target information obtained from the dictionary. At this time, the searching operation by the second searching device and the determination by the second determining device are not performed any longer.

Thus, with respect to the same input data, i.e., the input data inputted at the last time or in the past, the target information can be found by searching only the registration area. Accordingly, it is possible to retrieve the target information quickly and accurately.

Furthermore, if the target word is a place name or a facility name, the input information necessary for the navigation process can be quickly and accurately obtained. In addition, the navigation process is, for example, a position confirming process to confirm the location or position for displaying its peripheral map, a position recording process to record a position such as a final destination, an intermediate destination, a departure position etc., or to record a facility such as a gasoline station, a drive-in, a police station, etc.

According to the present invention, the above mentioned object can be achieved by a navigation apparatus for navigating a movable body, characterized in that the navigation apparatus has: an inputting device for inputting an input voice sound; a recognizing device for recognizing a target word corresponding to the received input voice sound; a first searching device for searching a registration area in which a plurality of words are registered for the target word; a first determining device for determining whether or not there is the target word in the registration area; a second searching device for referring a dictionary including a plurality of words divided into a plurality of levels of a hierarchical structure and searching a dictionary for the target word for each level, if the first determining device determines that there is not the target word in the registration area; a second determining device for determining whether or not there is the target word in the dictionary; a registering device for registering the target word into the registration area from the dictionary, if the second determining device determines that there is the target word in the dictionary; and a navigation control device for performing a navigation process to navigate the movable body on the basis of target word obtained from the registration area if the first determining device determines that there is the target word in the registration area, and for performing the navigation process to navigate the movable body on the basis of target word obtained from the dictionary if the second determining device determines that there is the target word in the dictionary.

Namely, in a case that the user inputs the input voice sound by his or her voice for the first time, the target word corresponding to the input voice sound is retrieved and registered in the registration area. Thereby, in a case that the user inputs the same input voice sound again, the target word can be quickly found from the registration area. Accordingly, it is possible to retrieve the target word quickly and accurately.

Furthermore, if the target word is a place name or a facility name, the input information necessary for the navigation process can be quickly and accurately obtained.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a block diagram of a navigation apparatus as an embodiment of the present invention;
FIG. 2 is a flow chart showing an operation of the navigation apparatus of the embodiment; and
FIG. 3 is diagram showing a retrieval operation of the navigation apparatus of the embodiment.

### DETAILED DESCRIPTION OF THE PREFERRED EMBODIMENTS

Referring to the accompanying drawings, an embodiment of the present invention will be now explained. In the embodiment explained below, the explanation is made as for a case where the present invention is applied to an on-vehicle navigation apparatus for a vehicle or auto-mobile.

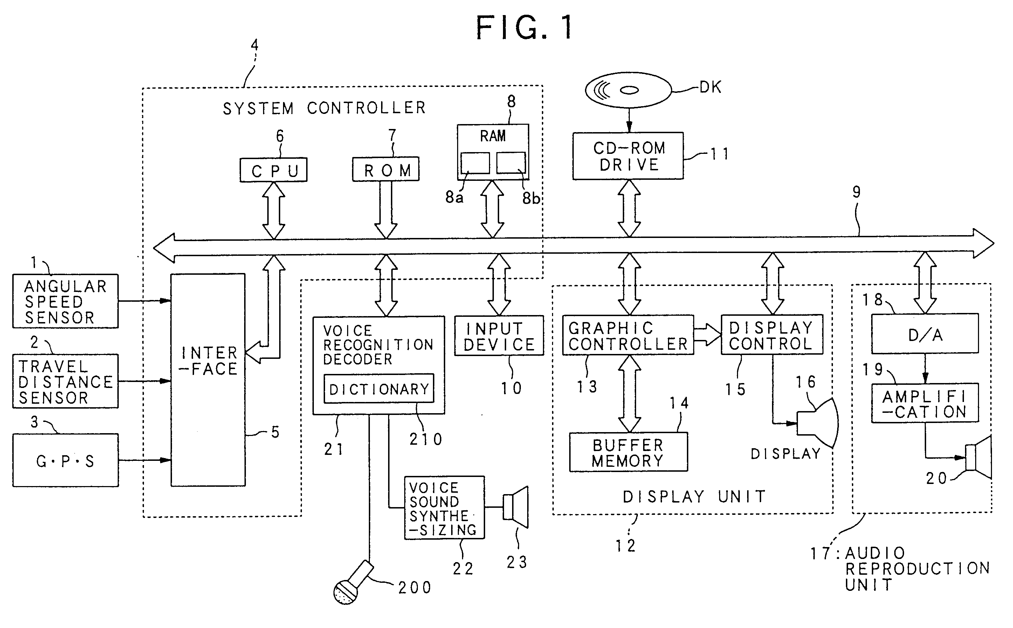

At first, a whole construction of the on-vehicle navigation apparatus as the embodiment of the present invention is explained with reference to FIG. 1.

In FIG. 1, an on-vehicle navigation apparatus 100 is provided with: an angular speed sensor 1 for detecting an angular speed of a self-vehicle at a lime of turning or rotating, and outputting an angular speed data and a relative azimuth data; a travel distance sensor 2 for calculating the number of pulses per one rotation of a drive shaft by counting the number of pulses of a pulse signal having a predetermined cycle accompanying the rotation of the drive shaft, and for outputting travel distance data based on the number of pulses per one rotation of the drive shaft; a GPS receiver 3 for receiving electric waves from GPS satellites to output GPS measurement data, and for outputting absolute azimuth data of the advance direction of the self-vehicle; a system controller 4 for performing an overall control of the navigation apparatus 100 on the basis of the relative azimuth data, the angular speed data, the travel distance data, the GPS measurement data and the absolute azimuth data; an input device 10 for inputting various data, such as an operation panel, a remote-control device or the like; a CD-ROM (Compact Disk-Read Only Memory) drive 11 for reading and outputting various data, such as map data including road data, which indicates the number of lanes, the width of the road, and data indicating detailed information as for each facilities, from a CD-ROM disk DK, under the control of the system controller 4; a display unit 12 for displaying various display data under the control of the system controller 4; an audio reproduction unit 17 for reproducing and outputting various audio data under the control of the system controller 4; a voice recognition decoder 21 for recognizing a word expressed by a sound voice inputted through an external microphone 200, and for outputting word data; a voice sound synthesizing unit 22 for synthesizing a voice sound on the basis of the word data outputted from the voice recognition decoder 21, and for generating a synthetic voice sound signal; and a speaker 23 for outputting the synthetic voice sound signal generated by the voice sound synthesizing unit 22 to the external.

The system controller 4 is provided with: an interface portion 5 for executing an interface operation with external sensors e.g. the angular speed sensor 1, the travel distance sensor 2 and the GPS receiver 3; a CPU 6 for controlling the whole portion of the system controller 4; a ROM (Read Only Memory) 7 for storing a control program etc. to control the system controller 4; and a RAM (Random Access Memory) 8 having a non-volatile type memory for storing various data such as the route data set in advance by the user through the input device 10, in the random accessing manner. The input device 10, the CD-ROM drive 11, the display unit 12, the audio reproduction unit 17 and the voice recognition decoder 21 are all connected with the system controller 4 via a bus line 9.

The display unit 12 is provided with: a graphic controller 13 for performing an overall control of the display unit 12 on the basis of a control data transmit led from the CPU 6 through the bus line 9; a buffer memory 14 having a VRAM (Video RAM) etc., for temporarily storing the image information ready to be displayed; and a display control unit 15 for controlling a display 16 such as the LCD device, the CRT display device or the like, on the basis of the image data outputted from the graphic controller 13.

The audio reproduction unit 17 is provided with a D/A (Digital to Analog) converter 18 for performing a D/A conversion of audio digital data transmitted from the CD-ROM drive 11 or the RAM 8 through the bus line 9; an amplifier 19 for amplifying an audio analog signal from the D/A converter 18; and a speaker 20 for converting the amplified audio analog signal to the audio sound, and for outputting it to the external.

The voice recognition decoder 21 is provided with a voice recognition circuit for recognizing a voice sound of an unspecified talker, which may be the known and diffused type of voice recognition IC on the market for example, and is constructed such that, when the voice sound is inputted through the external microphone 200, it retrieves a plurality of word candidacy data e.g. 5 word candidacy data each of which is close to the word expressed by the inputted voice sound from a built-in dictionary 210 storing a large number of word data, and that these word candidacy data are outputted through the bus line 9 to the CPU 6.

Then, the CPU 6 selects the word data equal or closest to the word expressed by the inputted voice sound from among word candidacy data outputted from the voice recognition decoder 21, and managed the selected word data as input data. On the basis of the input data, the CPU 6 reads the map data stored in the CD-ROM disk DK and so on, and displays them on the display unit 12.

The destination position and so on can be also inputted by the input device 10. But, if using the voice-sound-input, the user does not need to manipulate buttons. Thereby, it is possible to simplify the manipulation to input information.

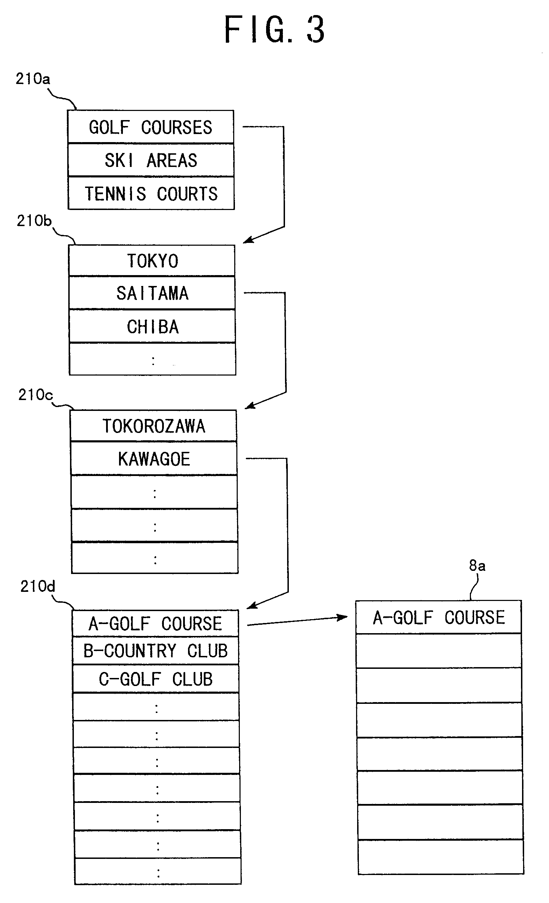

Furthermore, as shown in FIG.3, the dictionary 210 installed in the voice recognition decoder 21 has a hierarchical structure. In the dictionary 210, a large number of word data are divided into the plurality of levels. Thereby, the number of word data included in each level is relatively small. As the voice recognition decoder 21 searches the dictionary 210 for each level, it is possible to reduce false recognition. If the number of levels is increased, the number of recognizable words can be increased. More concretely, in the embodiment, the hierarchical structure of the dictionary 210 has four levels, such as a first level 210a, a second level 210b, a third level 210c and a fourth level 210d. The first level 210a is the highest level, and the fourth level 210d is the lowest level.

Furthermore, as shown in FIG. 1, the RAM 8 has a registration area 8a. The registration area 8a is to register final confirmed word data in the voice recognition process described below at the last time or in the past. When performing the voice recognition process, the voice recognition decoder 21 searches the registration area 8a for the target word data equal or close to the word pronounced by user. If the voice recognition decoder 21 can find the target word data from among word data registered in the registration area 8a, the voice recognition decoder 21 does not need to search the levels of the hierarchical structure of the dictionary 210 any longer. Thereby, even if there are the large number of levels in the dictionary 210, it is possible to find the target word data quickly. Namely, if the voice recognition process is performed with respect to a certain word once, the word data corresponding to the certain word is registered in the registration area 8a. Thereby, when the voice recognition process is performed with respect to the same word again, the word data equal or close to the word can be quickly found.

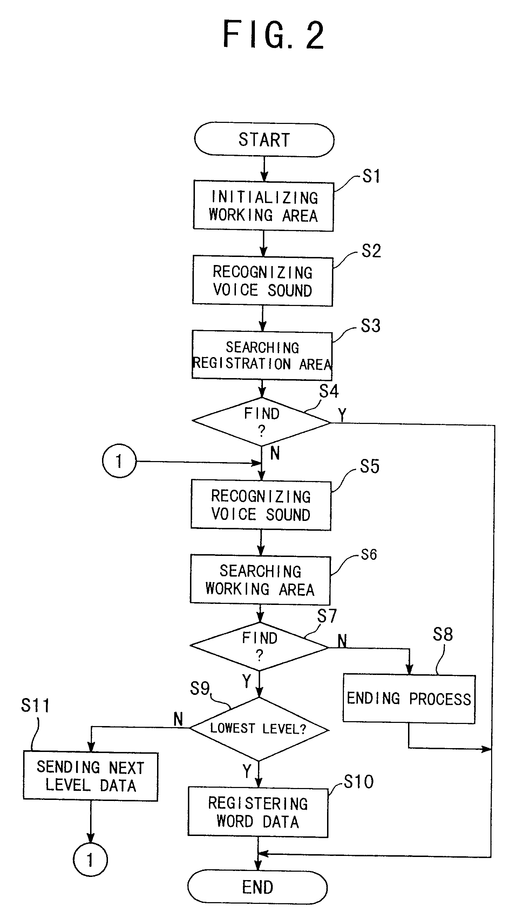

Next, the voice recognition process of the embodiment is explained with reference to FIGs. 2 and 3.

The operation indicated by a flowchart shown in FIG. 2 in the embodiment hereinbelow is mainly performed by the CPU 6 and the voice recognition decoder 21, and is performed as one part of the main navigation program to perform the navigation operation by controlling the whole portion of the on-vehicle navigation apparatus 100. The program corresponding to the flowchart of the present embodiment is stored in the ROM 7 as the control program in advance and is read out there from as the occasion demands.

In addition, in the following explanation, the voice recognition process starts in a condition that there is no registered word data in the registration area 8a.

In the navigation apparatus 100, as an initial state, a message to urge or induce the voice input of various information necessary for performing a certain control of the on-vehicle navigation apparatus 100 is displayed as characters or signs on the display 16, or this kind of message to urge or induce the voice inputting is sound-outputted from the speaker 20 or 23.

Here, as the various information for performing such a certain control, there is (i) information indicating the name of a location, which is necessary for the position confirming function to confirm the location or position for displaying its peripheral map on the display unit 12, (ii) information indicating the name of a location or the name of a facility, which is necessary for a position recording function to record a position such as a final destination, an intermediate destination, a departure position etc., or to record a facility such as a gasoline station, a drive-in, a police station, etc. into the RAM 8, and (iii) control command confirmation information, which is necessary for a control command confirming function to confirm a control command, such as a scroll command, a scale-enlarging command, a scale-reducing command of the map on the display unit 12 and so on.

In such an initial stale, if the user pronounces, for example, "golf courses", the external microphone 200 receives this voice sound, and the voice recognition decoder 21 performs the voice recognition as explained below.

At first, a working area 8b is initialized by sending word candidacy data thereto from the dictionary 210 (Step 1). The working area 8b is a memory area formed in the RAM 8. Namely, the voice recognition decoder 21 sends the word candidacy data into the working area 8b from the dictionary 210 for each level, and searches the word candidacy data sent into the working area 8b for the word data equal or close to the word pronounced by the user.

Here, initializing the working area 8b means the operation that voice recognition decoder 21 sends the word candidacy data included in the first level 210a to the working area 8b. For example, in case that a plurality of words, such as "golf courses", "ski areas" and "tennis courts" are included in the first level as word data, these word data are sent and stored to the working area 8b as word candidacy data.

Next, the voice recognition decoder 21 analyzes and recognizes the word pronounced by the user (Step 2). Next, the voice recognition decoder 21 searches the registration area 8a (Step 3), and determines whether or not there is the word data equal or close to the word pronounced by the user in the registration area 8a.

As mentioned above, as there is no registered word data in the registration area 8a when the voice recognition process starts, of course, the voice recognition decoder 21 cannot find the word data equal or close to the word pronounced by the user in the registration area 8a at this stage (Step 4; NO). Next, in order to search the word candidacy data in the working area 8b, a message to urge or induce the voice input is displayed or sound-outputted again. If the user pronounce a word (for example, "A-Golf Course"), the voice recognition decoder 21 analyzes and recognizes the pronounced word (Step 5).

Next, the voice recognition decoder 21 searches the word candidacy data included in the first level, which have been sent and stored form the dictionary 210 to the working area 8b (Step 6), and determines whether or not there is the word data equal or close to the word pronounced by the user among the word candidacy data in the working area 8b (Step 7).

As a result, if the voice recognition decoder 21 cannot find the word data equal or close to the word pronounced by the user (Step 7; NO), the CPU 6 carries out the predetermined ending process (Step 8), because the voice recognition process cannot be continued any longer. Thereafter, for example, the CPU 6 urges or induces the user to input a word again, and per forms the voice recognition process from the beginning.

On the other hand, if the voice recognition decoder 21 can find the word data equal or close to the word pronounced by the user from the working area 8b (Step 7; YES), the voice recognition decoder 21 next determines whether or not the found word data is the word data included in the lowest level in the hierarchical structure of the dictionary 210, i.e., the target word data (Step 9). In addition, the target word data is used for the navigation process as input data, and the target word data is recorded in the lowest level.

In this stage, as the word data is obtained as a result of searching the word candidacy data included in the first level, i.e., the word data is not the target word data (Step 9; NO), the voice recognition decoder 21 next sends word candidacy data included in the second level of the dictionary 210 into the working area 8b (Step 11). In addition, information to designate the second level related to each word candidacy data included in the first level is stored such that the information is correlated with each word candidacy data included in the first level. Thereby, if the one of the word candidacy data included in the first level is selected, word candidacy data included in the second level related to the selected word candidacy data can be accessed on the basis of the information.

For example, when assuming that the word pronounced by the user is "golf courses" and the word candidacy data shown in FIG. 3 are included in the first level 210a, the word candidacy data included in the second level 210b related to the "golf course" of the first level are sent into the working area 8b, as shown in FIG. 3.

Next, the voice recognition decoder 21 further urges and induces the user to input, and if the user pronounces a word, the voice recognition decoder 21 analyzes and recognizes the pronounced word (Step 5). For example, a message sound, such as "Input prefecture name!" is sound-outputted from the voice sound synthesizing unit 22 through the speaker 23 or the audio reproduction unit 17. Then, if the user pronounces a word, the voice recognition decoder 21 analyzes and recognizes the word (Step 5), searches the working area 8b, in which the word candidacy data included in the second level 210b of the dictionary 210 has been sent (Step 6), and determines whether or not there is the word data equal or close to the word pronounced by the user in the working area 8b (Step 7).

In this manner, the voice recognition decoder 21 searches the word candidacy data included in the lower level one after another until the voice recognition decoder 21 searches the word candidacy data included in the lowest level.

For example, if the user pronounces "Saitama", the word candidacy data included in the third level 210c related to "Saitama" of the second level are sent into the working area 8b. Then, the voice recognition decoder 21 sound-outputs a message sound, such as "Input city name!" in order to urge and induce the user to input. In response to this, if the user pronounces "Kawagoe", the word candidacy data included in the forth level 210d related to "Kawagoe" of the third level are sent into the working area 8b. Then, the voice recognition decoder 21 sound-outputs a message sound, such as "Input the golf course name!". In response to this, if the user pronounce "A-Golf Course", the voice recognition decoder 21 finds the word data equal or close to the word "A-Golf Course" (Step 7; YES) included in the fourth level 210d. Further, the voice recognition decoder 21 determines that this word data is the word data included in the lowest level (Step 9; YES). Thereby, the voice recognition decoder 21 confirms this word data as the target word data. Then, as shown in FIG. 3, the voice recognition decoder 21 resisters the target word data in the registration area 8a (Step 10), and the voice recognition process ends.

Next, the voice recognition decoder 21 sends the target word data to the CPU 6 as input data. Next, the CPU 6 is performed the navigation process on the basis of the confirmed target word data. For example, in case that this target word data indicates the word in response to the inquiry as for the representative position or location which peripheral map is to be displayed, this position or location is confirmed by the target word data, and the map information showing a rout to, for example, the A-golf course is displayed on the display unit 12. On the other hand, in case that this target word data indicates the word in response to the inquiry as for the facility such as the final destination, the intermediate destination, the departure location etc., the position thereof is confirmed by the target word data. In case that this target word data indicates the word in response to the inquiry as for the control command such as the scrolling command, the scale-enlarging command, the scale-reducing command of the map on the display unit 12 etc., this control command is confirmed on the basis of the target word data. Then, the process corresponding to the position or the control command confirmed on the basis of the voice input as explained above, is successively executed by the CPU 6, the display unit 12, the audio reproduction unit 17 and so on.

At another time, when the user inputs a word, the voice recognition decoder 21 searches the registered word data in the registration area 8a, and determines whether or not there is the word data equal or close to the word inputted by the user in the registration area 8a (Step 4). If the word inputted now is the word that the user inputted at the last time or in the past, there is the word data equal to the word in the registration area 8a. As a result, the voice recognition process ends at this stage.

For example, if the user pronounce "A-Golf Course", this word has been registered in the registration area 8a, so that the voice registration decoder 21 can find the word from the registration area 8a, and thereby, the voice recognition process ends without searching the levels of the hierarchical structure of the dictionary 210.

As explained above, according to the embodiment, the word data that the user inputted at the last time or in the past is registered in the registration area 8a. When the voice recognition process (the retrieval operation) is performed, the voice recognition decoder 21 searches the registration area 8a before searching the levels of the hierarchical structure of the dictionary 210. Hence, it is possible to make the retrieving line short, and make the voice recognition process fast.

Furthermore, when the target word data is confirmed in the voice recognition process, the confirmed target word data is automatically registered. Thereby, the user need not manipulate a certain button or the like in order to input the instruction to register the target word data. This is very convenient for the user.

Moreover, as the word that the user frequently uses is always stored in the working area 8b, it is possible to make the voice recognition process fast, and the user can quickly obtain the navigation information.

In addition, in the aforementioned embodiment, the voice recognition decoder 21 mainly performs the retrieval operation. However, the present invention is not limited to this. The CPU 6 may perform the retrieval operation.

Furthermore, in the aforementioned embodiment, the voice recognition technique is adapted for the data input. However, the present invention is not limited to this. The data may input by using the buttons or switches mounted on the input device 10.

Moreover, in the aforementioned embodiment, the voice recognition process (the retrieval operation) is carried out according to the control program stored in the ROM 7. However, the present invention is not limited to this. For example, the program may be stored in a program storage device or a recording medium, and the program may be read from the program storage device or the recording medium by a computer. Thus, if the program is executed by the computer, it is possible to make the computer function as the navigation apparatus of the present invention.

## Claims

1. An information retrieval apparatus (100) for retrieving a target information corresponding to an input data, from an information group (210) including a plurality of information, the plurality of information being divided into a plurality of levels of a hierarchical structure in the information group (210), characterized in that the information retrieval apparatus (100) comprises:
a first searching device (21) for searching a registration area, in which a plurality of information are registered, for the target information;
a first determining device (21) for determining whether or not there is the target information in the registration area;
a second searching device (21) for searching the information group (210) for the target information for each level, if the first determining device (21) determines that there is not the target information in the registration area;
a second determining device (21) for determining whether or not there is the target information in the information group (210);
a registering device (21) for registering the target information into the registration area from the information group (210), if the second determining device (21) determines that there is the target information in the information group (210); and
an outputting device (21) for outputting the target information from the registration area if the first determining device (21) determines that there is the target information in the registration area, and for outputting the target information from the information group (210) if the second determining device (21) determines that there is the target information in the information group (210).

2. An information retrieval apparatus (100) for retrieving a target word corresponding to an input voice sound, from a dictionary (210) including a plurality of words, the plurality of words being divided into a plurality of levels of a hierarchical structure in the dictionary (210), characterized in that the information retrieval apparatus (100) comprises:
a first searching device (21) for searching a registration area, in which a plurality of words are registered, for the target word;
a first determining device (21) for determining whether or not there is the target word in the registration area;
a second searching device (21) for searching the dictionary (210) for the target word for each level, if the first determining device (21) determines that there is not the target word in the registration area;
a second determining device (21) for determining whether or not there is the target word in the dictionary (210);
a registering device (21) for registering the target word into the registration area from the dictionary (210), if the second determining device (21) determines that there is the target word in the dictionary (210); and
an outputting device (21) for outputting the target word from the registration area if the first determining device (21) determines that there is the target word in the registration area, and for outputting the target word from the dictionary (210) if the second determining device (21) determines that there is the target word in the dictionary.

3. An information retrieval method of retrieving a target information corresponding to an input data, from an information group (210) including a plurality of information, the plurality of information being divided into a plurality of levels of a hierarchical structure in the information group (210), characterized in that the information retrieval method comprises the processes of:
searching a registration area, in which a plurality of information are registered, for the target information;
determining whether or not there is the target information in the registration area;
searching the information group (210) for the target information for each level, if it is determined that there is not the target information in the registration area;
determining whether or not there is the target information in the information group (210);
registering the target information into the registration area from the information group (210), if it is determined that there is the target information in the information group (210); and
outputting the target information from the registration area if it is determined that there is the target information in the registration area, and outputting the target information from the information group (210) if it is determined that there is the target information in the information group (210).

4. An information retrieval method of retrieving a target word corresponding to an input voice sound, from a dictionary (210) including a plurality of words, the plurality of words being divided into a plurality of levels of a hierarchical structure in the dictionary (210), characterized in that the information retrieval method comprises the processes of:
searching a registration area, in which a plurality of words are registered, for the target word;
determining whether or not there is the target word in the registration area;
searching the dictionary (210) for the target word for each level, if it is determined that there is not the target word in the registration area;
determining whether or not there is the target word in the dictionary (210);
registering the target word into the registration area from the dictionary (210), if it is determined that there is the target word in the dictionary (210); and
outputting the target word from the registration area if it is determined that there is the target word in the registration area, and outputting the target word from the dictionary (210) if it is determined that there is the target word in the dictionary.

5. A navigation apparatus (100) for navigating a movable body, characterized in that the navigation apparatus (100) comprises:
an inputting device (10) for inputting an input data;
a first searching device (21) for searching a registration area, in which a plurality of words are registered, for a target information corresponding to the input data;
a first determining device (21) for determining whether or not there is the target information in the registration area;
a second searching device (21) for referring a dictionary (210) including a plurality of information divided into a plurality of levels of a hierarchical structure and searching a dictionary (210) for the target information for each level, if the first determining device (21) determines that there is not the target information in the registration area;
a second determining device (21) for determining whether or not there is the target information in the dictionary (210);
a registering device (21) for registering the target information into the registration area from the dictionary (210), if the second determining device (21) determines that there is the target information in the dictionary (210); and
a navigation control device (4) for performing a navigation process to navigate the movable body on the basis of target information obtained from the registration area if the first determining device (21) determines that there is the target information in the registration area, and for performing the navigation process to navigate the movable body on the basis of target information obtained from the dictionary (210) if the second determining device (21) determines that there is the target information in the dictionary (210).

6. A navigation apparatus (100) according to claim 5, characterized in that the target word is a place name or a facility name.

7. A navigation apparatus (100) for navigating a movable body, characterized in that the navigation apparatus (100) comprises:
an inputting device (200) for inputting an input voice sound;
a recognizing device (21) for recognizing a target word corresponding to the received input voice sound;
a first searching device (21) for searching a registration area, in which a plurality of words are registered, for the target word;
a first determining device (21) for determining whether or not there is the target word in the registration area;
a second searching device (21) for referring a dictionary (210) including a plurality of words divided into a plurality of levels of a hierarchical structure and searching a dictionary (210) for the target word for each level, if the first determining device (21) determines that there is not the target word in the registration area;
a second determining device (21) for determining whether or not there is the target word in the dictionary (210);
a registering device (21) for registering the target word into the registration area from the dictionary (210), if the second determining device (21) determines that there is the target word in the dictionary (210); and
a navigation control device (4) for performing a navigation process to navigate the movable body on the basis of target word obtained from the registration area if the first determining device (21) determines that there is the target word in the registration area, and for performing the navigation process to navigate the movable body on the basis of target word obtained from the dictionary (210) if the second determining device (21) determines that there is the target word in the dictionary (210).

8. A navigation apparatus (100) according to claim 7, characterized in that the target word is a place name or a facility name.
